# FASCICULE DE BREVET EUROPEEN

(11) **EP 4 433 337 B1**
(45) Date de publication et mention de la délivrance du brevet: **03.09.2025**
(21) Numéro de dépôt: 22801517.8
(22) Date de dépôt: 14.10.2022
(51) Int. Cl.: B60T 7/12, B60T 13/66

(54) **PROCÉDÉ DE SECURISATION DE L'IMMOBILISATION D'UN VÉHICULE AUTOMOBILE A LA SUITE D'UNE COMMANDE DE FREINAGE DU VÉHICULE**
VERFAHREN ZUR SICHERUNG DER IMMOBILISIERUNG EINES MOTORFAHRZEUGS NACH EINEM FAHRZEUGBREMSBEFEHL
METHOD FOR SECURING THE IMMOBILIZATION OF A MOTOR VEHICLE FOLLOWING A VEHICLE BRAKING COMMAND

(30) Priorité: 19.11.2021 FR 2112241
(43) Date de publication de la demande: 25.09.2024
(73) Titulaire: Stellantis Auto SAS, 78300 Poissy (FR)
(72) Inventeur: MANCEUR, Malik, 95870 BEZONS (FR); IDLIMAM, Younes, 78450 VILLEPREUX (FR); HECKETSWEILER, Thierry, 90800 BAVILLIERS (FR); COHEN, Christel, 92160 ANTONY (FR)
(74) Mandataire: ESIP
(86) Numéro de dépôt international: PCT/FR2022/051940
(87) Numéro de publication internationale: WO 2023/089257

(56) Documents cités:
- EP-A1- 3 902 734
- CN-A- 107 867 283
- CN-A- 111 966 095
- CN-A- 112 590 784
- KR-A- 20190 065 808
- KR-B1- 102 224 150
- US-A1- 2014 288 785
- US-A1- 2019 135 291

## Description

La présente invention concerne de manière générale les systèmes d'aide à la conduite également désignés par ADAS (acronyme anglosaxon pour « Advanced Driver-Assistance System ») équipant certains véhicules automobiles et s'intéresse plus particulièrement à la sécurisation de l'immobilisation d'un véhicule automobile à la suite d'une commande de freinage du véhicule.

Ce type de commande est géré par un calculateur ESC (acronyme anglosaxon pour « Electronic Stability Control »), appelé également, contrôle de stabilité de trajectoire, qui coopère généralement avec la fonction ACC (acronyme anglosaxon pour « Adaptive Cruise Control »), appelée également, régulateur de vitesse adaptatif. Le régulateur de vitesse adaptatif offre une fonction de confort qui permet de réguler la vitesse du véhicule à une vitesse ou inter-distance choisie par le conducteur. Avec un véhicule équipé d'une boite de vitesse automatique, la fonction ACC gère la vitesse de 0 (stop) jusqu'à 180 km/h.

La fonction ACC fait partie des systèmes d'aide à la conduite ADAS, elle est embarquée dans plusieurs calculateurs notamment pour maintenir le véhicule équipé de ce système, appelé véhicule porteur, dans sa voie de circulation à une distance de sécurité par rapport à un autre véhicule qui a été détecté devant lui, appelé véhicule cible. Le véhicule porteur est parfois également désigné par « ego véhicule » ou encore, véhicule « hôte ».

Une consigne de freinage intervient quand le conducteur baisse la consigne de vitesse choisie via une l'IHM (Interface Homme Machine) présente dans l'habitacle du véhicule porteur, ou quand la distance/temps séparant le véhicule porteur du véhicule cible, déterminée par la fonction ACC, devient inférieure à une distance dite de sécurité. Cette distance de sécurité, appelée également distance inter-véhicule TIV, peut être paramétrée par l'utilisateur du véhicule porteur.

La commande de freinage agit sur le frein moteur et sur l'organe principal de freinage hydraulique du véhicule porteur et notamment sur les freins hydrauliques des roues du véhicule porteur.

La fonction ACC met en œuvre des moyens de détection et de suivi de cibles tels qu'un RADAR dit « RADAR ACC » (ou un laser), qui est généralement positionné à l'avant du véhicule porteur derrière le parechoc avant du véhicule porteur. Il peut être couplé à un autre type de caméra, caméra frontale et/ou multifonction, qui elle, est disposée au niveau du rétroviseur de l'habitacle en haut du pare-brise du véhicule porteur.

Les signaux captés par le RADAR (ou LASER) ACC sont traitées par un calculateur « RADAR » comportant notamment des moyens logiciels spécialisés dans la reconnaissance des signaux RADAR (ou LASER) et sont traduits en informations de distance et de vitesse (et donc de temps).

Le système ADAS est généralement associé à un écran d'affichage ou IHM présent dans le champ de vision du conducteur du véhicule porteur et notamment, sur la planche de bord du véhicule porteur, sur la console centrale ou par projection sur le parebrise, par exemple. Ces informations sont destinées au conducteur du véhicule porteur pour l'informer de l'état du véhicule porteur et/ou du suivi des fonctions d'assistance du véhicule porteur en l'alertant quand des situations à risque dans l'environnement proche du véhicule porteur surviennent.

Dans une situation de suivi d'un véhicule cible, à faible vitesse (vitesse inférieure à 30 km/h) dans laquelle le véhicule cible décélère jusqu'à s'arrêter, le système ADAS du véhicule porteur commande l'arrêt du véhicule porteur derrière le véhicule cible en respectant une consigne de distance minimale de sécurité qui a été paramétrée auparavant par l'utilisateur. Par exemple un TIV court correspond à un arrêt du véhicule porteur à 3 m, un TIV moyen à un arrêt du véhicule porteur à 4 m, un TIV long à un arrêt du véhicule porteur à 5m. Quand la mesure de la distance par le RADAR ACC, correspond à la consigne, la fonction ACC commande l'arrêt du véhicule porteur le calculateur ESC.

Si la fonction ACC est défaillante ou ne transmet pas la consigne d'immobilisation du véhicule porteur en fin de freinage à la fonction ESC à temps, à cause de l'environnement : un véhicule cible freine fortement avant l'arrêt ou un véhicule s'est inséré sévèrement à faible vitesse entre le véhicule porteur et le véhicule cible ou encore une décélération à vitesse nulle alors, il y a un risque que le véhicule porteur ne soit pas maintenu immobile, à l'arrêt, par le freinage hydraulique du véhicule en fin de freinage.

En outre, l'état de la technique est connu du document CN111966095A.

Par freinage hydraulique, on entend un freinage utilisant la force hydraulique exercée par le fluide de freinage sous pression sur les mâchoires des étriers de frein à disque du véhicule qui viennent serrer les plaquettes de freins, portées par les mâchoires, sur le disque. On parle également de serrage du frein hydraulique. L'invention consiste à assurer l'immobilisation du véhicule porteur, à l'arrêt, en cas d'absence de consigne d'immobilisation transmise par la fonction ACC dans une situation nécessitant une immobilisation complète du véhicule porteur. Dans ce type de situation, c'est le calculateur ESC qui prend alors le contrôle sur le calculateur RADAR et qui va ensuite lui retourner l'information de détection.

La fonction ACC confirme l'immobilisation par le freinage hydraulique du véhicule porteur via un retour d'information sur l'IHM.

A cet effet, la présente invention a pour premier objet un procédé de sécurisation de l'immobilisation d'un véhicule automobile, appelé véhicule porteur, à la suite d'une commande de freinage appliquée à l'organe principal de freinage hydraulique du véhicule porteur, ledit véhicule porteur comportant un système d'aide à la conduite, appelé système ADAS, pilotant un système de contrôle de stabilité de trajectoire, appelé système ESC, et un système de régulation de la dynamique longitudinale du véhicule porteur, appelé système ACC, comportant au moins un RADAR apte à détecter un véhicule, appelé véhicule cible, précédant le véhicule porteur, et des moyens de mesure de la vitesse du véhicule porteur et des signaux délivrés par les capteurs de tours de roues du véhicule porteur, appelés tops roues ; le procédé étant mis en œuvre par le système ADAS et consistant à réception d'une consigne d'accélération négative délivrée par le système ACC à la suite d'une détection d'un arrêt du véhicule cible devant le véhicule porteur :
- à commander le système ESC pour que ce dernier applique la consigne d'accélération négative jusqu'à ce que le véhicule porteur atteigne une vitesse nulle ;
- et si la vitesse est nulle et que les tops roues sont figés, à augmenter la pression hydraulique de l'organe principal de freinage hydraulique du véhicule porteur en agissant directement sur les freins hydrauliques des roues du véhicule porteur jusqu'à l'immobilisation complète du véhicule porteur ; et
- à confirmer au système ACC l'immobilisation complète du véhicule porteur par un retour d'information de l'organe de freinage hydraulique.

Selon une caractéristique, le procédé consiste à restituer à l'utilisateur du véhicule porteur, le retour d'information confirmant l'immobilisation complète du véhicule porteur, par l'affichage d'une interface graphique indicative du freinage hydraulique à l'origine de ladite immobilisation.

Selon une autre caractéristique, l'interface graphique indicative du freinage hydraulique à l'origine de ladite immobilisation, est une icône schématisant un disque de frein encadré par deux étriers de freins ; le disque comportant en son centre la lettre majuscule « A ».

La présente invention a pour deuxième objet un produit programme d'ordinateur comportant des instructions qui, lorsque le programme est exécuté par un ordinateur, conduisent celui-ci à mettre en œuvre les étapes du procédé tel que décrit ci-dessus.

La présente invention a pour troisième objet, un véhicule porteur comportant un système d'aide à la conduite, appelé système ADAS coopérant avec :
- un système de régulation de la dynamique longitudinale du véhicule porteur, appelé système ACC, couplé à au moins un radar ;
- un système de contrôle de stabilité de trajectoire, appelé système ESC ;
- des moyens de mesure de la vitesse du véhicule porteur et des signaux délivrés par les capteurs de tours de roues du véhicule porteur, appelés tops roues ;
- un organe principal de freinage hydraulique apte à exercer une pression hydraulique déterminée sur les freins hydrauliques des roues du véhicule porteur ; ledit système d'aide à la conduite étant agencé pour mettre en œuvre le procédé tel que décrit ci-dessus.

Selon une caractéristique, le véhicule comporte une IHM permettant d'afficher à l'utilisateur du véhicule porteur une représentation graphique symbolisant l'origine hydraulique du freinage confirmant l'immobilisation du véhicule porteur par le freinage hydraulique.

Un avantage de la présente invention est d'apporter une plus grande réactivité dans le freinage du véhicule porteur jusqu'à l'immobilisation complète du véhicule porteur à l'arrêt, empêchant tout mouvement involontaire du véhicule porteur vers l'avant ou l'arrière. La solution selon l'invention exploite en outre les informations déjà existantes et transitant sur le réseau du véhicule porteur, de type bus de données CAN (Controller Aera Network) ou autre.

D'autres avantages et caractéristiques pourront ressortir plus clairement de la description qui va suivre, donnée uniquement à titre d'exemple non limitatif et faite en se référant aux dessins dans lesquels :

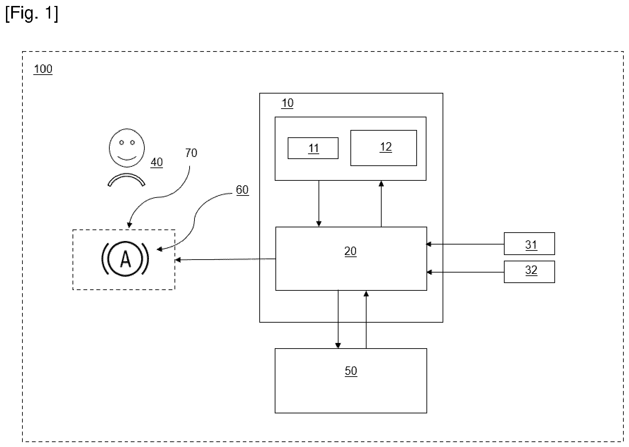

[Fig. 1] illustre un schéma-bloc d'un véhicule équipé d'un système d'aide à la conduite mettant en œuvre le procédé selon l'invention.

La figure 1 illustre schématiquement sous forme d'un schéma-bloc, un véhicule automobile porteur 100 équipé d'un système ADAS 10.

Le système ADAS 10 comporte au moins un RADAR ACC 11 (qui peut être remplacé par un LASER) et un calculateur ADAS (superviseur ADAS) 12 qui sont les principaux moyens de détection et de suivi d'un véhicule cible, implémentant la fonction ACC du véhicule porteur 100. Pour simplifier, on englobe dans le terme « RADAR », le capteur RADAR et le calculateur RADAR traitant les signaux de détection du capteur RADAR). Le système ADAS 10 reçoit en outre des informations délivrées par un capteur de vitesse 31 du véhicule porteur 100 et des signaux délivrés par un capteur 32 de tours de roues, appelées également « tops roues », associé à chacune des roues du véhicule porteur 100.

L'utilisateur 40 du véhicule porteur 100 à la main sur le paramétrage de la fonction ACC telles que l'activation/désactivation de la fonction ACC, la consigne de vitesse et la valeur du TIV, ...

Le procédé selon l'invention est mis en œuvre par le système ADAS 10.

La fonction ACC et le calculateur ESC sont désignés ci-après respectivement par système ACC 11, 12 et système ESC 20 du véhicule porteur 100. Le procédé est décrit ci-dessous quand Le système ACC 11, 12 est activé et que le véhicule porteur 100 roule à faible vitesse derrière (vitesse inférieure à 30km/h) un véhicule cible détecté par le radar ACC 11, et que ce dernier s'arrête devant le véhicule porteur 100, alors le système ADAS 10 commande le système ESC 20.

Le procédé consiste, à réception d'une consigne d'accélération négative délivrée par le système ACC 20, à la suite d'une détection d'un arrêt du véhicule cible devant le véhicule porteur 100, à commander le système ESC 20 pour que ce dernier applique la consigne de décélération négative jusqu'à ce que le véhicule porteur 100 atteigne une vitesse nulle (V = 0 ou Stop) mesurée par le capteur de vitesse 31.

Le procédé consiste ensuite à détecter si le véhicule porteur 100 est à l'arrêt en analysant l'évolution des « tops de roues » mesurés par les capteur de tours de roues 32. Si les « tops de roues » sont « figés », c'est-à-dire si les signaux délivrés par chaque capteur de tours de roues 32 n'évoluent plus dans le temps à partir de l'instant où la vitesse du véhicule porteur 100 est nulle, alors le procédé consiste à augmenter la pression hydraulique de l'organe principal de freinage hydraulique 50 du véhicule porteur 100 en agissant directement sur les freins hydrauliques des roues du véhicule porteur 100 (serrage hydraulique), non représentés, jusqu'à l'immobilisation complète et sécurisée du véhicule porteur 100. L'organe principal de freinage hydraulique 50 est aussi appelé frein de service se distinguant du frein de stationnement.

Une fois l'immobilisation complète et sécurisée réalisée, matérialisée par l'atteinte d'un seuil de pression hydraulique déterminé de l'organe principal de freinage hydraulique 50, le système ESC 20 envoie un signal de confirmation de l'immobilisation « hydraulique », au système ACC 11, 12.

L'information de la confirmation d'immobilisation « hydraulique » du véhicule porteur 100 est restituée à l'utilisateur 40 du véhicule porteur 100 sous la forme d'une interface graphique 60 affichée sur une IHM comportant un écran 70 agencé dans l'habitacle du véhicule porteur 100, par exemple, sur la planche de bord, la console centrale, le parebrise par projection, etc. L'interface graphique 60 représente un symbole ou icône, indicative du freinage hydraulique à l'origine de ladite immobilisation.

L'icône 60 représente schématiquement un cercle (disque de frein) encadré latéralement par deux arcs de cercle (étriers de freins) qui est une représentation habituelle et familière utilisée par les témoins, ou indicateurs lumineux, se rapportant à une fonction et/ou un organe de freinage du véhicule. Le cercle comporte en outre, en son centre, la lettre majuscule « A » permettant de distinguer l'icône 60 dédié à l'immobilisation « hydraulique » des autres fonctions de freinage. Cette représentation est familière et évocatrice pour l'utilisateur 40 du véhicule porteur 100 et lui permet d'autre part de mieux appréhender l'apport de la fonction ACC et plus généralement du système ADAS 10, dans la sécurisation de son véhicule et des passagers du véhicule porteur 100.

Le procédé implémente un produit programme d'ordinateur comportant des instructions pour l'exécution des étapes du procédé décrit ci-dessus.

Ce programme est implémenté par un ou plusieurs processeurs, ou calculateurs, du système ADAS (superviseur ADAS) du véhicule porteur 100 en lien avec un ou plusieurs processeurs, ou calculateurs, du système IVI (In-Vehicle Infotainment) qui est l'organe central du véhicule dédié au traitement des données et à la communication avec le conducteur.

Un tel programme pourra être mis à jour avec possibilité d'ajout de fonctions en utilisant une mise à jour par voie d'ondes de type OTA «Over The Air ».

## Revendications

1. Procédé de sécurisation de l'immobilisation d'un véhicule automobile, appelé véhicule porteur (100), à la suite d'une commande de freinage appliquée à l'organe principal de freinage hydraulique (50) du véhicule porteur (100), ledit véhicule porteur (100) comportant un système d'aide à la conduite, appelé système ADAS (10), pilotant un système de contrôle de stabilité de trajectoire, appelé système ESC (20), et un système de régulation de la dynamique longitudinale du véhicule porteur, appelé système ACC (11, 12), comportant au moins un RADAR (11) apte à détecter un véhicule, appelé véhicule cible, précédant le véhicule porteur (100), et des moyens de mesure de la vitesse du véhicule porteur (31) et des signaux délivrés par les capteurs de tours de roues (32) du véhicule porteur (100), appelés tops roues ; le procédé étant mis en œuvre par le système ADAS (10) et consistant à réception d'une consigne d'accélération négative délivrée par le système ACC (11, 12) à la suite d'une détection d'un arrêt du véhicule cible devant le véhicule porteur (100) :
- à commander le système ESC (20) pour que ce dernier applique la consigne d'accélération négative jusqu'à ce que le véhicule porteur (100) atteigne une vitesse nulle ; **caractérisé en ce que** si la vitesse est nulle et que les tops roues sont figés, à augmenter la pression hydraulique de l'organe principal de freinage hydraulique (50) du véhicule porteur (100) en agissant directement sur les freins hydrauliques des roues du véhicule porteur (100) jusqu'à l'immobilisation complète du véhicule porteur (100) ; et
- à confirmer au système ACC (11, 12) l'immobilisation complète du véhicule porteur (100) par un retour d'information de l'organe de freinage hydraulique (50).

2. Procédé selon la revendication précédente, consistant à restituer à l'utilisateur (40) du véhicule porteur (100), le retour d'information confirmant l'immobilisation complète du véhicule porteur (100), par l'affichage d'une interface graphique (60) indicative du freinage hydraulique à l'origine de ladite immobilisation.

3. Procédé selon la revendication précédente, dans lequel l'interface graphique (60) indicative du freinage hydraulique à l'origine de ladite immobilisation est une icône schématisant un disque de frein encadré par deux étriers de freins ; le disque comportant en son centre la lettre majuscule « A ».

4. Véhicule porteur (100) comportant un système d'aide à la conduite, appelé système ADAS (10) coopérant avec :
- un système de régulation de la dynamique longitudinale du véhicule porteur (100), appelé système ACC (11, 12) couplé à au moins un radar (11) ;
- un système de contrôle de stabilité de trajectoire, appelé système ESC (20) ;
- des moyens de mesure de la vitesse du véhicule porteur (31) et des signaux délivrés par les capteurs de tours de roues (32) du véhicule porteur (100), appelés tops roues ;
- un organe principal de freinage hydraulique (50) apte à exercer une pression hydraulique déterminée sur les freins hydrauliques des roues du véhicule porteur (100) ;
ledit système d'aide à la conduite (10) étant agencé pour mettre en œuvre le procédé selon l'une des revendications 1 à 2.

5. Véhicule (100) selon la revendications précédente, comportant en outre une IHM (70) permettant d'afficher à l'utilisateur (40) du véhicule porteur (100) une représentation graphique (60) symbolisant l'origine hydraulique du freinage confirmant l'immobilisation du véhicule porteur (100) par le freinage hydraulique.

6. Produit programme d'ordinateur comportant des instructions qui, lorsque le programme est exécuté par le système ADAS (10) du véhicule de la revendication 4, conduisent celui-ci à mettre en œuvre les étapes du procédé selon l'une des revendications de 1 à 2.

## Patentansprüche

1. Verfahren zum Sichern der Stilllegung eines Kraftfahrzeugs, genannt Trägerfahrzeug (100), nach einem Bremsbefehl an der hydraulischen Hauptbremse (50) des Trägerfahrzeugs (100), wobei das Trägerfahrzeug (100) ein Fahrunterstützungssystem, genannt ADAS (10), das ein Fahrbahnstabilisierungssteuerungssystem, genannt ESC (20), steuert, und ein System zur Steuerung der Längsdynamik des Trägerfahrzeugs, genannt ACC-System (11, 12), umfasst, das mindestens eines umfasst Radar (11), geeignet zum Erfassen eines dem Trägerfahrzeug (100) vorausfahrenden Fahrzeugs, das als Zielfahrzeug bezeichnet wird, und von Mitteln zum Messen der Geschwindigkeit des Trägerfahrzeugs (31) und der von den Raddrehsensoren (32) des Trägerfahrzeugs (100), den so genannten Radtops, ausgegebenen Signale; wobei das Verfahren durch das ADAS-System (10) durchgeführt wird und das Empfangen eines negativen Beschleunigungssollwerts, der vom ACC-System (11, 12) ausgegeben wird, nach dem Erfassen eines Stillstands des Zielfahrzeugs vor dem Trägerfahrzeug (100) umfasst:
- das ESC-System (20) so zu steuern, dass das ESC-System den negativen Beschleunigungssollwert einsetzt, bis das Trägerfahrzeug (100) eine Geschwindigkeit von Null erreicht, **dadurch gekennzeichnet, dass**;
- bei Nullgeschwindigkeit und eingefrorenen Radtops den hydraulischen Druck der hydraulischen Hauptbremse (50) des Trägerfahrzeugs (100) durch direkte Einwirkung auf die hydraulischen Bremsen der Räder des Trägerfahrzeugs (100) erhöhen, bis das Trägerfahrzeug (100) vollständig zum Stillstand gekommen ist, und
- dem ACC-System (11, 12) durch Rückmeldung der hydraulischen Bremse (50) die vollständige Stilllegung des Trägerfahrzeugs (100) zu bestätigen.

2. Verfahren nach dem vorhergehenden Anspruch, das darin besteht, dem Benutzer (40) des Trägerfahrzeugs (100) die Rückmeldung zurückzugeben, die die vollständige Stilllegung des Trägerfahrzeugs (100) bestätigt, indem eine grafische Schnittstelle (60) angezeigt wird, die die hydraulische Bremsung anzeigt, die zu der Stilllegung geführt hat.

3. Verfahren nach dem vorhergehenden Anspruch, bei dem die grafische Schnittstelle (60), die die hydraulische Bremsung anzeigt, die das Festhalten verursacht, ein Symbol ist, das eine Bremsscheibe schematisiert, die von zwei Bremssatteln eingerahmt ist; wobei die Scheibe in ihrer Mitte den Großbuchstaben "A" aufweist.

4. Trägerfahrzeug (100) mit einem Fahrerassistenzsystem, das so genannte ADAS-System (10), das mit Folgendem zusammenarbeitet:
- ein System zur Regelung der Längsdynamik des Trägerfahrzeugs (100), das so genannte ACC-System (11, 12), das mit mindestens einem Radar (11) gekoppelt ist;
- ein System zur Kontrolle der Flugbahnstabilität, das so genannte ESC-System (20);
- Mittel zur Messung der Geschwindigkeit des Trägerfahrzeugs (31) und der von den Raddrehzahlsensoren (32) des Trägerfahrzeugs (100) abgegebenen Signale, so genannte Radtops;
- eine hydraulische Hauptbremse (50), die einen bestimmten hydraulischen Druck auf die hydraulischen Bremsen der Räder des Trägerfahrzeugs (100) ausüben kann;
das Fahrerassistenzsystem (10) ist so angeordnet, dass es das Verfahren nach einem der Ansprüche 1 bis 2 ausführt.

5. Fahrzeug (100) nach dem vorhergehenden Anspruch, das ferner eine HMI (70) umfasst, die es ermöglicht, dem Benutzer (40) des Trägerfahrzeugs (100) eine grafische Darstellung (60) anzuzeigen, die den hydraulischen Ursprung der Bremsung symbolisiert und die Stilllegung des Trägerfahrzeugs (100) durch die hydraulische Bremsung bestätigt.

6. Computerprogrammprodukt mit Instruktionen, die, wenn das Programm durch das ADAS-System (10) des Fahrzeugs nach Anspruch 4 ausgeführt wird, dieses veranlassen, die Schritte des Verfahrens nach einem der Ansprüche 1 bis 2 auszuführen.

## Claims

1. Method for security mode the immobilisation of a motor vehicle, called a carrier vehicle (100), following a braking order applied to the main hydraulic braking member (50) of the carrier vehicle (100), said carrier vehicle (100) comprising a driving aid system, called ADAS system (10), controlling a path stability control system, called ESC system (20), and a system for regulating the longitudinal dynamics of the carrier vehicle, called ACC system (11, 12), comprising at least one RADAR (11) Capable of detecting a vehicle, called target vehicle, preceding the carrier vehicle (100), and means for measuring the speed of the carrier vehicle (31) and the signals delivered by the wheel lathe sensors (32) of the carrier vehicle (100), called wheel tops; the method being implemented by the ADAS system (10) and consisting in receipt of a negative acceleration setpoint delivered by the ACC system (11, 12) following detection of a shutdown of the target vehicle in front of the carrier vehicle (100):
- ordering the ESC system (20) so that the latter applies the negative acceleration setpoint until the carrier (100) reaches zero speed, **characterised in that**;
- if the speed is zero and the top wheels are frozen, to increase the hydraulic pressure of the main hydraulic braking member (50) of the carrier (100) by acting directly on the hydraulic brakes of the wheels of the carrier (100) until the carrier (100) is completely immobilised; and
- to confirm to the ACC system (11, 12) the complete immobilisation of the carrier (100) by an information return of the hydraulic braking member (50).

2. Method according to the previous claim, consisting in returning to the user (40) of the carrier (100) the information return confirming the complete immobilisation of the carrier (100), by the display of a chart interface (60) indicative of the hydraulic braking on origin of said immobilisation.

3. Method according to the previous claim, in which the chart interface (60) indicative of the hydraulic braking on origin of said immobilisation is an icon schematizing a brake disk surrounded by two brake callipers; the disk comprising in its compound the capital letter "A".

4. Carrying vehicle (100) with a driving aid system, called ADAS (10), cooperating with:
- a system for regulating the longitudinal dynamics of the carrier vehicle (100), called an ACC system (11, 12) coupled to at least one radar (11);
- a track stability control system, known as ESC (20);
means for measuring the speed of the carrier (31) and the signals delivered by the wheel lathe sensors (32) of the carrier (100), called wheel tops;
- a main hydraulic braking member (50) capable of exerting a determined hydraulic pressure on the hydraulic brakes of the wheels of the carrier vehicle (100);
said driving aid system (10) being arranged to implement the method according to one of claims 1 to 2.

5. Vehicle (100) according to the previous claims, further comprising an HMI (70) for displaying on the user (40) of the carrier (100) a chart representation (60) symbolising the hydraulic origin of the braking confirming the immobilisation of the carrier (100) by the hydraulic braking.

6. Computer plan product comprising instructions which, when the plan is executed by the ADAS system (10) of the vehicle of claim 4, lead the latter to implement the steps of the method according to one of claims 1 to 2.
